# EUROPEAN PATENT SPECIFICATION

(11) **EP 0 507 410 B1**
(45) Date of publication and mention of the grant of the patent: **30.10.1996**
(21) Application number: 92200923.8
(22) Date of filing: 01.04.1992
(51) Int. Cl.: H04L 5/14, H04J 3/14, H04L 1/24

(54) **A wide-band communication network and a method for tracing disturbances therein**
Breitbandübertragungsnetzwerk und Verfahren zur Ortung von Störungen darin
Réseau de communication à large bande, et procédé pour localiser des perturbations

(30) Priority: 02.04.1991 NL 9100566
(43) Date of publication of application: 07.10.1992
(73) Proprietor: ROAX B.V., NL-3703 BR Zeist (NL)
(72) Inventor: Verheuvel, Petro Johannes Franciscus, NL-3812 ZE Amersfoort (NL); de Roo, Minno, NL-3711 BZ Austerlitz (NL)
(74) Representative: Louet Feisser, Arnold

(56) References cited:
- EP-A- 0 227 217

## Description

The invention relates to a wide-band communication network comprising at least one control unit and at least two field terminals arranged for information transmission in packets between them, further comprising modems for carrier wave communication and remote control means for setting said modems.

It has become apparent that in such a network in particular the communication in a return channel may be disturbed, which may be caused by various factors. Thus a field terminal may maintain a carrier wave in the network as a result of a defect, whilst a field terminal is expected to apply a carrier wave to the return channel only if this is required in order to transfer information in the form of packets. A carrier wave should not be present during a so-called packet interspace (interval between packets). It is also possible that a source of disturbance other than a defective terminal transmitter is the cause of the occurrance of a signal during the packet interspace. Such disturbances may occur both separately and in combination with each other. Tracing such disturbances requires a time-consuming and laborious operation, whereby the source of the disturbance signal must be traced, possibly via intermediate terminals and checking of the various field terminals. With somewhat larger networks the tracing of such disturbances can easily take a few hours, during which the network is in effect completely out of operation.

EP-A-0 227 217 discloses a modem comprising a so called "constant carrier watchdog" which alerts a user when the modem places too long a carrier wave on the network. In that case te mechanism will interfere to force the signal to be inactive. Also the mechanism will alter the channel of the modem and a message is given to the user of that modem reporting that the modem is defective. However, it still can occur that a modem dends a continuous carrier wave in the network, for example in case the carrier wave switch gets defective, which switch is located in the modem after the watchdog. Other disturbances than the carrier of the modems itself are not detected.

The object of the invention is to provide an improved network of the kind mentioned in the introduction, according to the features of claim 1, as well as a method for efficiently tracing disturbances in a wide-band communication network, according to the features of claim 3.

In order to accomplish that objective it is proposed to arrange a network of the kind mentioned in the introduction in such a manner that, influenced by the control unit, at least one of the at least two field terminals can be set to another carrier frequency. Especially with larger networks it is preferred to set a number of field terminals, possibly via one or more intermediate terminals, to another carrier frequency. By means of a predetermined searching procedure, which may also be initiated automatically in case a signal is detected during a packet interspace, the cause of the disturbance can be traced by successively switching over field terminals in batches or by switching over field terminals individually. Subsequently the source of the disturbance can be transferred to a carrier frequency, which is normally not operational within the system. As a result of this the source of the disturbance is effectively traced and eliminated. During the subsequent reparation of the source of the disturbance the remainder of the network can continue to operate unimpededly. In this way the network is out of operation for no more than a few seconds, instead of a few hours.

Further particulars of the invention will become apparent from the following description of an embodiment of the present invention, wherein reference is made to the diagram.

In the diagram the control unit of a wide-band communication network is indicated at 1. This control unit, several of which may be used, is connected to a number of intermediate terminals 2, whilst each intermediate terminal is connected to a number of user terminals or field terminals 3. For a smaller network the intermediate terminals may be left out, whereas for a larger network also a first intermediate terminal may be connected to respectively a plurality of second intermediate terminals connected to the field terminals. The system is arranged in the form of a so-called wide-band communication network, i.e. the information flow between the field terminals and the control unit is modulated on a carrier wave. Because the network is arranged for information flows in two directions and electronic amplifiers are connected in the network, if necessary, use is made of one carrier wave for the communication of the control unit with the field terminals and of another carrier wave for the communication of the field terminals with the control unit. For an effective communication it is important that the carrier frequencies of the control unit correspond with the frequencies of the field terminals. In order to adapt the carrier waves for transferring information use is made of so-called wide-band modems, which modulate or demodulate, as the case may be, the carrier waves for transferring information between the field terminal and the control unit and conversely. For modulating the carrier waves a certain band width is used. This band width is designated as the communication channel, through which several information flows may pass, however. The modems for the field terminals are adapted so as to be set to various frequencies or channels within a predetermined carrier frequency range.

For the communication use is generally made of so-called protocols. Information is thereby transmitted in packets by or via the control unit. In order to send information from a field terminal to a more central part, generally the control unit, a packet is applied to a carrier wave in the return channel. For that purpose the carrier wave carrying the desired, locally measured or otherwise established data is modulated and transmitted via the return channel. With a communication of this kind successive carrier waves are applied to the return channel, separated from each other by short intervals or packet interspaces. During such a short packet interspace all carrier waves are eliminated. The modems used are so-called RF-modems, which are "frequency agile" and which can be set to different frequencies, i.e. to different channels, by remote control, by means of a relevant instruction from e.g. the control unit.

During a packet interspace the presence of a carrier wave or a disturbance is detected by means of the detection system in the central control unit. For that purpose use is made of a carrier wave detection circuit. If a carrier wave or a disturbance is detected at a moment when this is not allowable or when no packet interspace is detected within a predetermined time, it is established that the channel used exhibits a disturbance. It is noted that this detection method can be used in combination with the usual checksum monitoring from the data protocol. If the control unit establishes that a disturbance signal is present in the return channel, an instruction is given via the so-called forward channel, with which information packets are sent from the control unit to one or more field terminals. Said forward channel is a separate channel, so that a possible disturbance in the return channel will not affect this channel. As a result of this it is possible to continue feeding instructions to the field terminals.

When a disturbance occurs in the return channel one or more of the field terminals of the control unit are instructed to switch over to another channel. This channel will be called the test channel hereafter. The channel originally used for the communication between the field terminals and the control unit is called the home channel.

By transferring one or more field terminals to the test channel, it may be established whether it concerns a disturbance of the field terminal(s) in question or whether it concerns a disturbance outside that scope, a so-called external disturbance. When a field terminal is transferred to the test channel, a possible external disturbance will continue to exist in the home channel, whereas a defective field terminal will be transferred along to the test channel. By gradually transferring all field terminals, with the exception of the source of the disturbance, to the test channel, this test channel can subsequently be used as the new home channel.

If it appears that the disturbance is no longer present in the home channel, but occurs in the test channel, the procedure is continued, so as to locate the disturbing field terminal. By re-transferring one or more field terminals to the other undisturbed channel, i.e. the original home channel, it can be detected which terminal causes the disturbance. Because after each frequency change of one or more field terminals the central unit checks whether the field terminal causing the disturbance has been transferred along, the field terminal causing the disturbance can be located after several testing cycles.

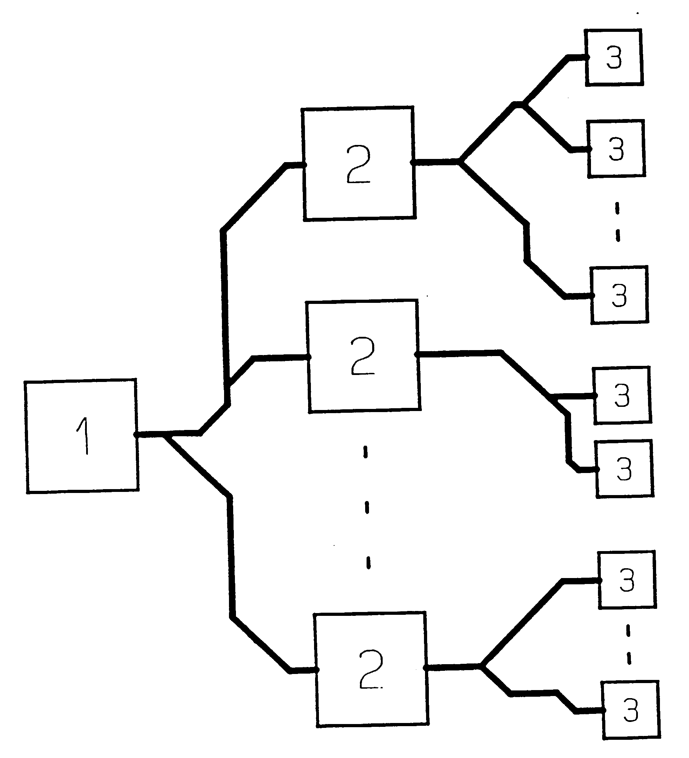

After the field terminal causing the disturbance has thus been located, a warning may be issued in a suitable manner, e.g. by means of a printer, a display screen, an alarm signal and the like. It will be necessary thereby to eliminate the field terminal causing the disturbance. This can be done in a simple manner, by transferring the field terminal from the home channel to a so-called parking channel, which parking channel is further not connected in the normal network. If a field terminal is equipped with a variable level control, it is also possible to reduce the level of the field terminal in such a manner that the communication channel is no longer disturbed by the field terminal in question. Since the entire system for tracing the disturbance is an electronic system, possibly operating automatically, the field terminal causing the disturbance can be traced and eliminated within a few seconds. The network as a whole can further be normally used for data communication, whilst the reparation of the field terminal causing the disturbance can be started at once, if desired, without a fault-clearing engineer having to make the rounds of the intermediate terminals and several field terminals. It is noted that although in the drawing a (mini) star network is shown, also a network having the structure of a tree or yet another structure may be used.

## Claims

1. A wide-band communication network comprising at least one control unit (1) and at least two field terminals (3) arranged for information transmission in packets between them, further comprising modems for carrier wave communication and remote control means for setting said modems, characterized in that said control unit (1) comprises a carrier wave detection circuit for checking during each interval between information packets (packet interspaces) whether or not a carrier wave and/or a disturbance signal is present, said control unit(1) furthermore comprising means for assigning by remote control at least one field terminal (3) to another carrier frequency range in case such a carrier wave or such a disturbance signal is present during a packet interspace, and means for detecting subsequently whether this has resulted in the carrier wave and/or the disturbance signal in the packet interspace likewise being transferred to the new carrier frequency, or that the disturbance has been maintained at the original frequency, and means for setting at least one field terminal (3) to another carrier frequency in case the disturbance has been maintained.

2. A wide-band communication network according to claim 1, provided with a large number of field terminals (3), which are coupled to the control unit (1) via intermediate terminals (2), characterized by switching means for switching in batches as well as individually, one or more field terminals (3) and/or an intermediate terminal (2) with all field terminals (3) connected thereto and the control unit (1) to another carrier frequency.

3. A method for tracing disturbances in a wide-band communication network, said network being provided with at least one control unit (1) and at least two field terminals (3), whereby, using modems for carrier wave communication that can be set by remote control, information is respectively transmitted in packets between at least two field terminals (3) and the control unit (1), characterized in that during each interval between information packets (packet interspaces) said control unit (1) checks whether or not a carrier wave and/or a disturbance signal is present, while making use of a carrier wave detection circuit, which, in case such a carrier wave or such a disturbance signal is present during a packet interspace, assigns at least one field terminal (3) to another carrier frequency range by remote control, and which subsequently ascertains whether this has resulted in the carrier wave and/or the disturbance signal in the packet interspace likewse being transferred to the new carrier frequency, or that the disturbance has been maintained at the original frequency, in which latter case at least one field terminal (3) must be set to another carrier frequency in a corresponding manner, which procedure is repeated until the source of the unintended carrier wave and/or the disturbance has been located.

4. A method according to claim 3, wherein the wide-band communication network is built up of at least one control unit (1) and a large number of field terminal (3) and is provided with one or more intermediate terminals (2), characterized in that upon the detection of the presence of a carrier wave and/or of a disturbance signal during a packet interspace batches of one or more intermediate terminals (2) and/or a group of field terminals (3) are set to another carrier frequency.

5. A method according to claim 3 or 4, characterized in that after the source of the disturbance has been located only the modem in question is transferred to a parking channel, which is otherwise not used.

6. A method according to claims 3 or 4, characterized in that after the source of the disturbance has been located the modem in question is set to a level that no longer causes a disturbance.

## Patentansprüche

1. Breitbandkommunikationsnetzwerk, umfassend zumindest eine Steuereinheit (1) und zumindest zwei Feldanschlüsse (3), angeordnet zur Informationsübertragung in Paketen zwischen sich, ferner umfassend Modems zur Trägerwellenkommunikation und Fernsteuermittel zum Einstellen besagter Modems, dadurch gekennzeichnet, daß besagte Steuereinheit (1) eine Trägerwellenerfassungsschaltung umfaßt, um während jedes Intervalls zwischen Informationspaketen (Paketzwischenräumen) zu überprüfen, ob eine Trägerwelle und/oder ein Störsignal vorliegt, oder nicht, wobei besagte Steuereinheit (1) ferner Mittel zum Zuweisen zumindest eines Feldanschlusses (3) zu einem anderen Trägerfrequenzbereich durch Fernsteuerung in dem Fall, daß solch eine Trägerwelle oder solch ein Störsignal während eines Paketzwischenraums vorliegt, und Mittel zum folgenden Erfassen, ob dies dazu geführt hat, daß die Trägerwelle und/oder das Störsignal in dem Paketzwischenraum ebenfalls auf die neue Trägerfrequenz übertragen worden ist, oder ob die Störung bei der ursprünglichen Frequenz beibe-halten worden ist, und Mittel zum Setzen zumindest eines Feldanschlusses (3) auf eine andere Trägerfrequenz in dem Fall, daß die Störung beibehalten worden ist, umfaßt.

2. Breitbandkommunikationsnetzwerk nach Anspruch 1, bereitgestellt mit einer großen Anzahl von Feldanschlüssen (3), die mit der Steuereinheit (1) über Zwischenanschlüsse (2) verbunden sind, gekennzeichnet durch Schaltmittel zum sowohl satzweisen als auch individuellen Schalten von einem oder mehreren Feldanschlüssen (3) und/oder einem Zwischenanschluß (2) mit allen damit verbundenen Feldanschlüssen (3) und der Steuereinheit (1) auf eine andere Trägerfrequenz.

3. Verfahren zum Orten von Störungen in einem Breitband-kommunikationsnetzwerk, wobei besagtes Netzwerk mit zumindest einer Steuereinheit (1) und zumindest zwei Feldanschlüssen (3) bereitgestellt ist, wobei, unter Verwendung von Modems zur Trägerwellenkommunikation, die durch Fernsteuerung gesetzt werden können, Information jeweils in Paketen zwischen zumindest zwei Feldanschlüssen (3) und der Steuereinheit (1) übertragen wird, dadurch gekennzeichnet, daß während jedes Intervalls zwischen Informationspaketen (Paketzwischenräumen) besagte Steuereinheit (1) überprüft, ob eine Trägerwelle und/oder ein Störsignal vorliegt, oder nicht, während eine Trägerwellenerfassungseinheit verwendet wird, die in dem Fall, daß solch eine Trägerwelle oder solch ein Störsignal während eines Paketzwischenraums vorliegt, zumindest einem Feldanschluß (3) einen anderen Trägerfrequenzbereich durch Fernsteuerung zuweist, und die daraufhin feststellt, ob dies dazu geführt hat, daß die Trägerwelle und/oder das Störsignal in dem Paketzwischenraum ebenfalls auf die neue Trägerfrequenz übertragen worden ist, oder ob die Störung bei der ursprüng-lichen Frequenz beibehalten worden ist, wobei im letzteren Fall zumindest ein Feldanschluß (3) auf eine andere Trägerfrequenz auf entsprechende Weise gesetzt werden muß, wobei die Prozedur solange wiederholt wird, bis die Quelle der unerwünschten Trägerwelle und/oder der Störung lokalisiert worden ist.

4. Verfahren nach Anspruch 3, wobei das Breitbandkommuni-kationsnetzwerk aus zumindest einer Steuereinheit (1) und einer großen Anzahl von Feldanschlüssen aufgebaut ist und mit einem oder mehreren Zwischenanschlüssen (2) ausgerüstet ist, dadurch gekennzeichnet, daß auf das Erfassen des Vorliegens einer Trägerwelle und/oder eines Störsignals während eines Paketzwischenraums Sätze aus einem oder mehreren Zwischen-anschlüssen (2) und/oder einer Gruppe von Feldanschlüssen (3) auf einer anderen Trägerfrequenz gesetzt werden.

5. Verfahren nach Anspruch 3 oder 4, dadurch gekennzeichnet, daß, nachdem die Quelle der Störung lokalisiert worden ist, nur das in Frage stehende Modem auf einen Parkkanal übertragen wird, der ansonsten nicht verwendet wird.

6. Verfahren nach Anspruch 3 oder 4, dadurch gekennzeichnet, daß, nachdem die Quelle der Störung lokalisiert worden ist, das in Frage stehende Modem auf ein Niveau gesetzt wird, das nicht länger eine Störung hervorruft.

## Revendications

1. Un réseau de communication à large bande comprenant au moins une unité de contrôle (1) et au moins deux terminaux de terrain (3) agencés pour des transmissions entre elles d'informations en paquet, ce réseau comprenant de plus des modems de communication par onde porteuse et des moyens de contrôle à distance pour caler ces modems, caractérisé en ce que cette unité de contrôle (1) comprend un circuit de détection d'onde porteuse pour vérifier pendant chaque intervalle séparant des paquets d'informations (espace inter paquet) si une onde porteuse ou un signal de perturbation est présent ou pas ; cette unité de contrôle (1) comprenant de plus des moyens pour basculer par les moyens de contrôle à distance au moins l'un des terminaux de terrain sur une autre gamme de fréquences porteuses au cas où une telle onde porteuse ou signal de perturbation est présente pendant un espace inter paquet ; et des moyens pour détecter par la suite s'il en a résulté que l'onde transporteuse et/ou le signal de perturbation à l'intérieur de l'espace inter paquet a été transféré de la même manière à la nouvelle fréquence porteuse, ou si la perturbation est restée dans la fréquence initiale ; ainsi que des moyens pour caler au moins l'un des terminaux de terrain (3) à une autre fréquence porteuse au cas où la perturbation se soit maintenue.

2. Un réseau de communication à large bande selon la revendication 1, comprenant un grand nombre de terminaux de terrain (3) reliés à l'unité de contrôle (1) par des terminaux intermédiaires (2) caractérisé en ce que des moyens de basculement sont prévus pour basculer vers une autre fréquence porteuse l'unité de contrôle ainsi que soit en groupe, soit individuellement, un ou plusieurs terminaux de terrain (3) et/ou un terminal intermédiaire (2) avec tous ses terminaux de terrain (3) qui lui sont reliés.

3. Un procédé de localisation de pertubation dans un réseau de communication à large bande, ledit réseau comprenant au moins une unité de contrôle (1) et au moins deux terminaux de terrain (3), ce réseau utilisant des modems pour communication par onde porteuse pouvant être calée par des moyens de contrôle à distance, procédé par lequel l'information est respectivement transmise par paquet entre au moins deux terminaux de terrain (3) et l'unité de contrôle (1), caractérisé en ce que pendant chaque intervalle entre paquet d'informations (espace inter paquet) ladite unité de contrôle (1) vérifie si une onde porteuse et/ou un signal de pertubation est présent ou non en utilisant un circuit de détection de signal porteur, faisant que, au cas où une telle onde porteuse ou un tel signal de pertubation est présent pendant l'espace inter paquet, cette unité de contrôle bascule au moins l'un des terminaux de terrain (3) sur une autre gamme de fréquence porteuse par des moyens de contrôle à distance, et examine ultérieurement si ceci à résulter en ce que l'onde porteuse et/ou le signal de pertubation de l'espace inter paquet à été transféré de manière analogue à la nouvelle fréquence porteuse, ou si la pertubation est restée sur la fréquence initiale, dernier cas dans lequel un terminal de terrain (3) au moins doit alors être calé à une autre fréquence de porteuse de manière analogue, ce procédé étant répété jusqu'à ce que la source de l'onde porteuse indésirée et/ou la pertubation soit localisée.

4. Une procédé selon la revendication 3, pour un réseau de communication à large bande construit à partir d'au moins une unité de contrôle (1) et un nombre important de terminaux de terrain (3) et comprenant également un ou plusieurs terminaux intermédiaires (2), caractérisé en ce que, lors de la détection de la présence d'un signal porteur et/ou d'un signal de pertubation pendant un espace inter paquet, un groupe d'un ou plusieurs terminaux intermédiaires (2) et/ou groupe de terminaux de terrain (3) sont basculés sur une autre fréquence porteuse.

5. Un procédé selon la revendication 3, caractérisé en ce que, lorsque la source de pertubation a été localisée, seulement le modem en question est transféré sur un canal de parking qui n'est pas autrement utilisé.

6. Un procédé selon la revendication 3 ou 4, caractérisé en ce que, une fois que la source de pertubation a été localisée, le modem en question est calé à un niveau de telle sorte qu'il ne provoque plus de pertubation.
